# EUROPEAN PATENT SPECIFICATION

(11) **EP 4 251 825 B1**
(45) Date of publication and mention of the grant of the patent: **07.08.2024**
(21) Application number: 21811360.3
(22) Date of filing: 19.11.2021
(51) Int. Cl.: E04G 3/24, E04G 3/32, F03D 80/50, F03D 80/55, E04G 3/28

(54) **TOWER GUIDE ARRANGEMENT FOR A WIND TURBINE BLADE ACCESS PLATFORM**
TURMFÜHRUNGSANORDNUNG FÜR EINE WINDTURBINENSCHAUFELZUGANGSPLATTFORM
AGENCEMENT DE GUIDAGE DE TOUR DESTINÉ À UNE PLATEFORME D'ACCÈS À UNE PALE D'ÉOLIENNE

(30) Priority: 26.11.2020 DK PA202070788
(43) Date of publication of application: 04.10.2023
(73) Proprietor: PP Energy ApS, 6430 Nordborg (DK)
(72) Inventor: JUNKER, Peter Moos, 6000 Kolding (DK); MARTENSEN, Lars, 6400 Sønderborg (DK)
(74) Representative: Keil & Schaafhausen Patentanwälte PartGmbB
(86) International application number: PCT/EP2021/082245
(87) International publication number: WO 2022/112111

(56) References cited:
- EP-A1- 2 693 045
- WO-A1-2017/122475
- KR-B1- 101 324 974
- US-A1- 2009 173 573

## Description

### Field of the invention

The invention relates to a blade access arrangement for a rotor blade of a wind power plant having a tower, the arrangement comprising a platform , tower guide means for guiding the platform against the tower, a bar arrangement capable of being displaced in relation to the platform and connecting the platform with the tower guiding means, said blade access arrangement comprising a hoisting arrangement for hoisting the blade access arrangement up and down, where the bar arrangement comprises an extension beam connected to the bar arrangement via a hinge, the bar arrangement further comprising a pair of telescopic beams comprising outer beams and inner beams, the outer beams are capable of being displaced in beam guides in a longitudinal direction of the outer beams and in relation to the platform.

### Background of the invention

From WO 2009/121792 A2 such a blade access arrangement is known, where a suspendable maintenance platform for accessing a blade of a wind turbine. The platform includes arms for holding a maintenance unit, a frame onto which each arm is movably attached in a joint enabling planar movement, and means for supporting the frame in relation to the wind turbine tower. The maintenance unit is slidably attached to the arms that are configured for positioning the platform in relation to the blade, and wherein the frame is configured to be in close proximity to the turbine tower.

WO 2017/215711 A1 discloses an inspection device for a rotor blade having a maintenance chamber through which a rotor blade can pass vertically through a floor opening and a roof opening. The maintenance chamber is arranged on a supporting frame, and the supporting frame is connected to a bracing frame, which bracing frame can be supported on the tower of the wind turbine. By moving the bracing frame relative to the supporting frame it is possible to change the position of the maintenance chamber in relation to the tower of the wind turbine, keeping the maintenance chamber in a distance from the tower allowing the rotor blade running through the maintenance platform. EP 2 693 045 A1 discloses a blade access arrangement with the features of the preamble of claim 1.

### Objective of the invention

The objective of the invention is to provide a blade access arrangement where the platform can access the blade tip, which is positioned in a distance from the tower greater than other parts of the blade and where the platform in a transport situation between wind power plants can be reduced in size in such a way the whole arrangement can be transported on a trailer or on other suitable vehicle.

This objective is solved by a blade access arrangement according to claim 1, where the bar arrangement comprises an extension beam connected to the bar arrangement via a hinge.

Hereby it is possible to reduce the length of the inner beam by folding the extension beam into a transport position.

According to the invention, the bar arrangement comprises a pair of telescopic beams comprising outer beams and inner beams.

The beam guides can be connected to the platform via pivot points.

Hereby is achieved, that the beams can have a long range in an operative configuration and can at the same time have a short extent in a transport configuration.

According to the invention, the outer beams are capable of being displaced in beam guides in a longitudinal direction of the outer beams and in relation to the platform.

Hereby is achieved, that the beams can have an even longer range in an operative configuration and can at the same time limiting the extent of the beams in a transport configuration.

According to the invention, the beam guides are fastened to the platform.

In an embodiment, the beam guides can be fastened to an underside of the platform.

In an alternative embodiment, the beam guides can be fastened to an upper side of the platform.

Hereby is achieved that the center of gravity is located low in the platform.

In an embodiment the inner beams capable of being displaced inside and in a longitudinal direction of the outer beams, and that the extension beams are provided at an end of the inner beams being the end pointing away from the tower guide.

Hereby it is possible to move the platform to a position where it is possible to access the tip of the blade, which tip is the point of the blade having the largest distance from the tower and at the same time keeping a size of the platform making it possible that the whole arrangement can be transported on a trailer or on other suitable vehicle.

In an embodiment, the extension beam is connected via the hinge to the inner beams and the hinge is placed in an upper part of the beam and having a substantial horizontal axis.

Hereby it is possible to reduce the length of the inner beam by folding the extension beam from a substantially horizontal position into a substantial upright position along an end of the platform. Hence the extension beam is folded up along the end of the platform, so the extension beam points up in the air.

In an embodiment, the extension beam is connected via the hinge to the inner beams and the hinge is placed in an outer part or side of the beam and having a substantial vertical axis.

Hereby it is possible to fold the extension beam along sides of the platform.

In an embodiment, the beams on the opposite side in relation to the hinge are provided with locking means, such as a securing split, bolt or similar.

Hereby is secured that the beam do not fold unintentionally.

In an embodiment, wheels, rollers or bushings are provided between the inner and outer beams.

Hereby it is possible for the inner and outer beams to be displaced smoothly in relation to each other.

In an embodiment, the inner beams at one end are provided with a stop for abutment against the beam guides.

In an embodiment, at least one of the beam guides is provided with a motor or drive for driving a wire, which wire in one end is attached to the beam guide at a first wire anchoring point, the other end of the wire being attached to the beam guide at a second wire anchoring point on the opposite side of the beam guide in relation to the first wire anchoring point, said wire between its ends is attached to the anchoring points and routed from the motor or drive to the anchoring points via a number of pulleys, said wire, between the ends of the wire, is wound with a number of windings around a pulley, wheel or capstan of the motor.

Hereby is established a drive for moving the beams in a telescopic way in relation to each other.

In an embodiment, the wire drive extends the beams and when reversing the drive slackening the wire, the beams retracts into each other due to the weight of the blade access arrangement forcing the platform towards the tower.

In an embodiment, a tensioning element is provided between the wire and at least one of the anchoring points.

The tensioning element can be a resilient member, a spring or a gas spring.

Hereby is achieved that the wire is provided with sufficient tension going from a folded configuration to an active configuration, where the extension bars are positioned in longitudinal extension of the inner bars.

In an embodiment each beam or bar arrangement is provided with a motor or a drive, which motors or drives are synchronized to ensure a symmetrical movement of the displaceable telescopic connections.

Hereby it is possible to move the platform along an axis in a radial direction of the tower.

In an embodiment, the Ibeams are provided with a square or rectangular cross section.

In an alternative embodiment, the beams are provided with a triangular or trapezoidal cross section.

In an embodiment, the telescopic beams can be lattice beams.

Hereby it is possible to provide strong telescopic beams and at the same time keep the weight low.

In an embodiment, the bar arrangement is connected to the tower guide means via pivot points.

Hereby the ends of the telescopic beams together with the tower guide means can take up any irregularities or change in shape from the tower surface.

Effects and features of the different embodiments are to a large extent analogous to those described above in connection with the first embodiment.

The present invention will become apparent from the detailed description given below. The detailed description and specific examples disclose preferred embodiments of the invention by way of illustration only. Those skilled in the art understand from guidance in the detailed description that changes and modifications may be made within the scope of the invention, which is only defined by the appended claims.

Hence, it is to be understood that the herein disclosed invention is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present invention, will be more fully appreciated by reference to the following illustrative and non-limiting detailed description of example embodiments of the present invention, when taken in conjunction with the accompanying drawings.
Figure 1 shows a blade access arrangement in a position with a platform positioned in a transport configuration;
Figure 2 shows the platform with extension beams, folded into an active position;
Figure 3 shows a view from above of the platform in figure 2;
Figure 4 shows a bar arrangement with the platform removed;
Figure 5 shows one side of a wire pull assembly for movement of the bar arrangement of figure 4;
Figure 6 shows the bar arrangement with the extension bar folded in an upright position (transport configuration); and
Figure 7 shows one side of the wire pull assembly for movement of the bar arrangement of figure 6.

### Detailed description

The present invention will now be described with reference to the accompanying drawings, in which preferred example embodiments of the invention are shown. The invention may, however, be embodied in other forms and should not be construed as limited to the herein disclosed embodiments. The disclosed embodiments are provided to fully convey the scope of the invention to the skilled person.

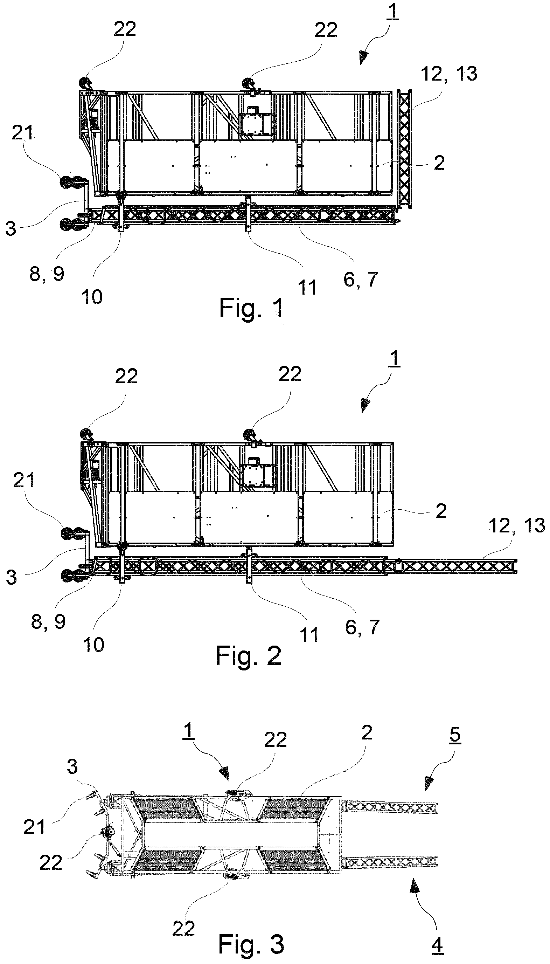

Figure 1 shows a blade access arrangement 1 for a rotor blade (not shown) of a wind power plant (not shown). The wind power plant has a tower and a nacelle arranged on top of the tower. One or more blades are fixed to a hub of a rotor, which is rotatably supported in the nacelle.

The blade access arrangement 1 comprises a platform 2. The platform 2 has sides extending from a front end to a back end of the platform 2 and is connected to tower guide means 3, which rest against the tower. The tower guide means 3 can be provided with wheels or rollers 21 so that the tower guide means 3 can guide the platform 2 along the tower. The tower guide means 3 are connected to the platform 2 by means of a bar arrangement 4, 5.The bar arrangement 4, 5 comprises an extension beam 12, 13 connected to the bar arrangement 4, 5 via a hinge 14.

In an embodiment the bar arrangement 4, 5 connects the platform 2 with the tower guiding means 3 via beam guides 10, 11. A hoisting arrangement 22 for hoisting the blade access arrangement 1 up and down is provided. The hoisting arrangement 22 comprises a pair of hoisting means 22 placed on each side of the platform 2. The hoisting arrangement 22 comprises a further hoisting means 22, which is placed on a hoisting arm at the back end of the platform 2 or placed on the back end of the platform 2. The hoisting arm can be connected pivotably to the back end of the platform 2, the back end of the platform 2 being the end closest to the tower guide means 3.

The platform 2 can comprise a number of sub-platforms , where one sub-platform further can be divided into two sub-platform parts for easy access of a wind turbine blade into the center of the platform 2 by opening the platform 2 for encircling the blade.

When the platform 2 is in closed position an opening is provided in centre of the platform 2 through which opening a wind turbine blade can extend.

Changing shape or configuration of the platform 2 can be done by use of actuators or like equipment positioned between sub-platforms or between sub-platforms and frames for a decking.

The tower guide means 3 is in an embodiment shown in figure 3 arranged in pairs in a distance from each other and configured to be distributed along a perimeter of the tower. Each of the tower guide means 3 can be provided with a pivot point to which a bar of the bar arrangement in shape of telescopic beams 4, 5 is connected in a joint in such a way that the joint can pivot around an axis perpendicular to a plane parallel to a floor section of the platform 2.

The telescopic beams 4, 5 comprise, as for example shown in figures 1 and 2, outer beams 6, 7 and inner beams 8, 9 which inner beams are capable of being displaced inside and in a longitudinal direction of the outer beams 6, 7. At an end of the inner beams 8, 9, being the end pointing away from the tower guide means 3, the beams can be provided with a connection for connection of the extension beam 12, 13. At the same end of the inner beams 8, 9, a stop 18 is placed to ensure that the telescopic beams is not displaced in relation to the beam guides 11 in such an extent, that they will separate.

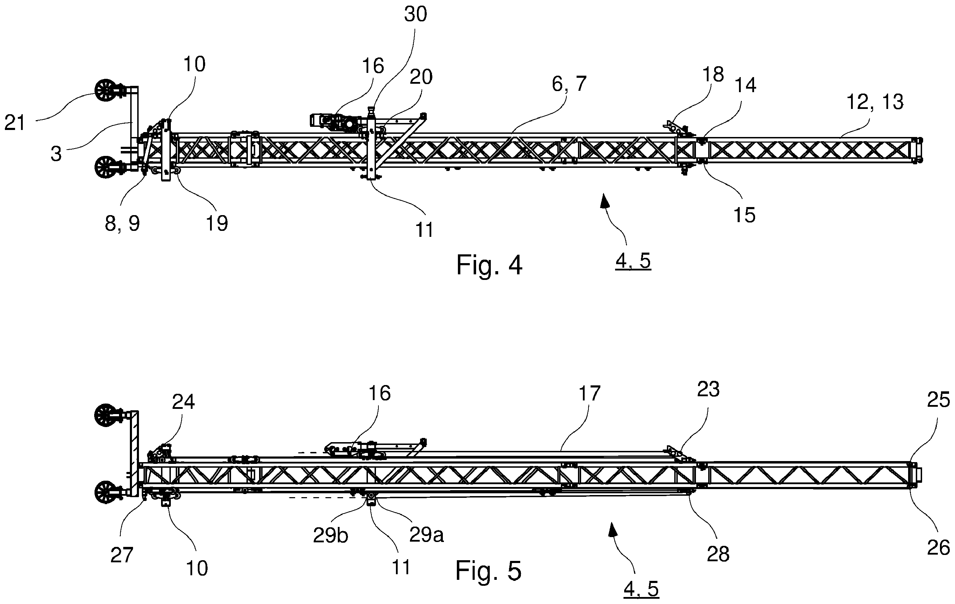

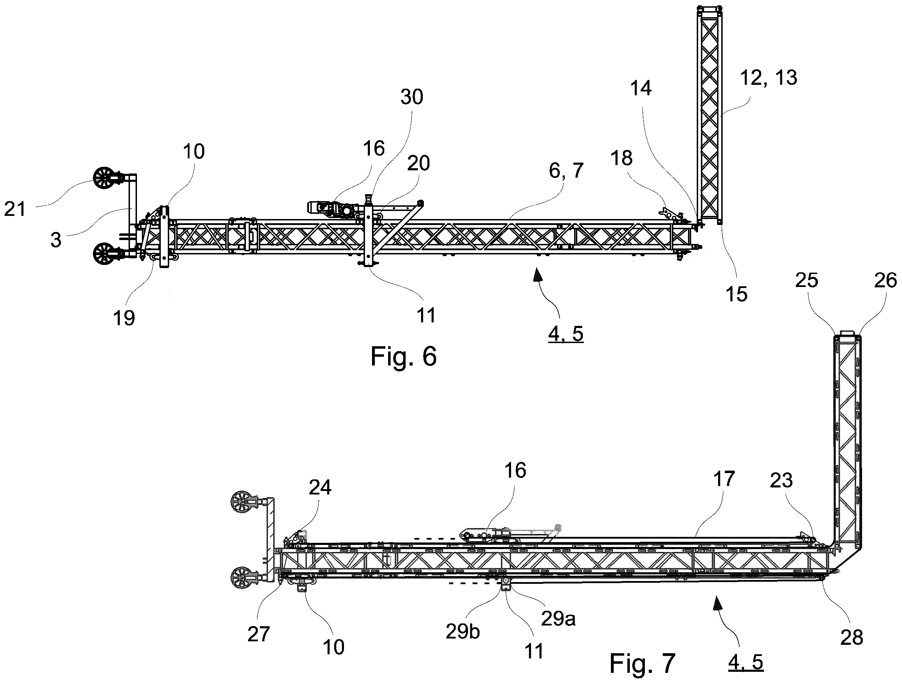

The extension beams 12, 13 are in an embodiment as shown in figures 4 and 6, connected to the inner beams 8, 9 by a hinge connection 14 at their upper sides and by locking means 15 such as a securing split, bolt or similar at their lower sides. This makes it possible to bring or fold the extension beams 12, 13 in a vertical or upright position during transport minimizing the overall length of the blade access arrangement 1. The inner 8, 9, 12, 13 and outer 4, 5 beams are displaceable relative to each other in a lengthwise direction in order to perform a telescopic action. The outer 4, 5 and inner beams 8, 9, 12, 13 can be moved relative to each other by hydraulic or pneumatic cylinders, but since weight is an important factor other solutions such as a wire or belt drive 17 in combination with a number of pulleys 23, 24, 25, 26, 27, 28 and one or more motors 16 driving a pulley, wheel or capstan (not shown), is suitable solutions.

In an embodiment, at least one of the beam guides 10, 11 is provided with a motor or drive 16 for driving a wire 17, which wire 17 in one end is attached to the beam guide 11 at a first wire anchoring point 29a. The other end of the wire 17 is attached to the beam guide 11 at a second wire anchoring point 29b on the opposite side of the beam guide 11 in relation to the first wire anchoring point 29a. The wire 17 is between its ends attached to the anchoring points 29a, 29b and routed from the motor or drive 16 to the anchoring points 29a, 29b via a number of pulleys 23, 24, 25, 26, 27, 28. Between the ends of the wire 17, the wire 17 is wound with a number of windings around a pulley, wheel or capstan of the motor 16, ensuring a firm grip between the wire 17 and the pulley, wheel or capstan of the motor 16.

In figures 5 and 7 a simplified routing of the wire 17 for retracting the telescopic beams 4, 5 is shown. A similar wire routing is placed on the other side of the motor or drive 16 and having a second anchor point 29b on the opposite side of the beam guide 11 in relation to the first anchor point 29a. This part of routing of the wire enables that the telescopic beams 4, 5 can be extended.

Hereby, the wire 17 is connected to the motor or drive 16 and to the anchor points 29a, 29b in such a way that when the pulley, wheel or capstan of the motor 16 pulls the wire 17 in one direction the telescopic beams 4, 5 are retracted and when the pulley, wheel or capstan of the motor 16 changes direction of rotation, the wire is pulled in an opposite direction and thereby the telescopic beams 4, 5 are extended.

The wire 17 being looped around a number of sets of pulleys 23, 24, 25, 26, 27, 28 also leads to the effect that the pulleys acts as a pulley block system.

Hereby is achieved that the motor can move the telescopic beams in and out using less power and with a lower speed.

In an embodiment a tensioning element (not shown) is provided between the wire 17 and at least one of the anchoring points 29a, 29b for pre-tensioning of the wire 17 in such a way that when folding the extension beams 12, 13 from a transport position into an active position where the extension beams 12, 13 are positioned extending longitudinally from the inner beams 8, 9, the wire 17 will have a suitable tensioning. Hereby meaning that the wire 17 do not slacken in such an extent that the wire 17 no longer engages with the pulleys 23, 24, 25, 26, 27, 28.

The tensioning element can be a resilient element such as a spring element, a gas spring or another suitable resilient element for tensioning the wire.

The beams 4, 5 can have a square or rectangular cross section.

In an alternative embodiment, the beams 4, 5 can have a triangular or trapezoidal cross section.

In an embodiment, the telescopic beams can be lattice beams.

The beams 4, 5 being lattice beams reduces the overall weight of the blade access arrangement 1.

A number of wheels, rollers or bushings 19, 20 is provided between the inner 8, 9, 12, 13 beams and outer beams 6, 7 in order to facilitate relative movement between the beams.

Between the platform 2 and the telescopic beams 4, 5 one or more pair of beam guides 10, 11 are provided. The beam guides 10, 11 allows the beams 4, 5 to be displaced in a crosswise direction in relation to a longitudinal direction of the beams 4, 5. The beam guides 10, 11 are also provided with wheels or rollers 19, 20 to facilitate relative movement between the outer beams 6, 7 and the beam guides 10, 11 in a lengthwise direction in relation to the beams 6, 7 and in relation to the platform 2.

The beam guides 11 can be connected to the platform 2 via pivot points 30.

In an embodiment, the beam guides 10, 11 can be fastened to an underside of the platform 2.

In an alternative embodiment, the beam guides 10, 11 can be fastened to an upper side of the platform 2.

The person skilled in the art realizes that the present invention is not limited to the preferred embodiments described above. The person skilled in the art further realizes that modifications and variations are possible within the scope of the appended claims. Additionally, variations to the disclosed embodiments can be understood and effected by the skilled person in practicing the claimed invention, from a study of the drawings, the description, within the scope of the appended claims.

## Claims

1. Blade access arrangement (1) for a rotor blade of a wind power plant having a tower, the arrangement (1) comprising a platform (2), tower guide means (3) for guiding the platform (2) against the tower, a bar arrangement (4, 5) capable of being displaced in relation to the platform (2) and connecting the platform (2) with the tower guiding means (3), said blade access arrangement (1) comprising a hoisting arrangement for hoisting the blade access arrangement (1) up and down, where the bar arrangement (4, 5) comprises an extension beam (12, 13) connected to the bar arrangement (4, 5) via a hinge (14), the bar arrangement further comprising a pair of telescopic beams comprising outer beams (6, 7) and inner beams (8, 9), the outer beams (6, 7) are capable of being displaced in beam guides (10, 11) in a longitudinal direction of the outer beams (6, 7) and in relation to the platform (2), **characterized in that** the beam guides (10, 11) are fastened to the platform (2).

2. Blade access arrangement according to claim 1, **characterized in that** the inner beams (8, 9) are capable of being displaced inside and in a longitudinal direction of the outer beams (6, 7), and that the extension beams (12, 13) are provided at an end of the inner beams (8, 9) being the end pointing away from the tower guide (3).

3. Blade access arrangement according to any of the claims 1 or 2, **characterized in that** the extension beam (12, 13) is connected via the hinge (14) to the inner beams (8, 9) and that the hinge (14) is placed in an upper part of the beam (8, 9, 12, 13) and having a substantial horizontal axis.

4. Blade access arrangement according to any of the claims 1 - 3, **characterized in that** the extension beam (12, 13) is connected via the hinge (14) to the inner beams (8, 9), **characterized in that** the hinge (14) is placed in an outer part or side of the beam (8, 9, 12, 13) and having a substantial vertical axis.

5. Blade access arrangement according to any of the claims 1 to 4, **characterized in that** wheels, rollers or bushings (19, 20) are provided between the inner beams (8, 9, 12, 13) and outer beams (6, 7).

6. Blade access arrangement according to any of the claims 1 - 5, **characterized in that** the inner beams (8, 9) at one end are provided with a stop (18) for abutment against the beam guides (11).

7. Blade access arrangement according to any of the claims 1 to 6, **characterized in that**, at least one of the beam guides (10, 11) is provided with a motor or drive (16) for driving a wire (17), which wire (17) in one end is attached to the beam guide (11) at a first wire anchoring point (29a), the other end of the wire (17) being attached to the beam guide (11) at a second wire anchoring point (29b) on the opposite side of the beam guide (11) in relation to the first wire anchoring point (29a) said wire (17) between its ends is attached to the anchoring points (29a, 29b) and routed from the motor or drive (16) to the anchoring points (29a, 29b) via a number of pulleys (23, 24, 25, 26, 27, 28), said wire (17), between the ends of the wire (17), is wound with a number of windings around a pulley, wheel or capstan of the motor 16.

8. Blade access arrangement according to claim 7, **characterized in that** a tensioning element is provided between the wire (17) and at least one of the anchoring points (29a, 29b).

9. Blade access arrangement according to claim 8, **characterized in that** the tensioning element is a resilient member, a spring or a gas spring.

## Patentansprüche

1. Blattzugangsanordnung (1) für ein Rotorblatt einer Windkraftanlage mit einem Turm, wobei die Anordnung (1) eine Plattform (2), Turmführungsmittel (3) zum Führen der Plattform (2) gegen den Turm, eine Stangenanordnung (4, 5), die in Bezug auf die Plattform (2) verschoben werden kann und die Plattform (2) mit den Turmführungsmitteln (3) verbindet, umfasst, wobei die Blattzugangsanordnung (1) eine Hebeanordnung zum Hoch- und Herunterheben der Blattzugangsanordnung (1) umfasst, wobei die Stangenanordnung (4, 5) einen Verlängerungsträger (12, 13) umfasst, der über ein Scharnier (14) mit der Stangenanordnung (4, 5) verbunden ist, wobei die Stangenanordnung ferner ein Paar von Teleskopträgern umfasst, die äußere Träger (6, 7) und innere Träger (8, 9) umfassen, die äußeren Träger (6, 7) in Trägerführungen (10, 11) in einer Längsrichtung der äußeren Träger (6, 7) und in Bezug auf die Plattform (2) verschoben werden können, **dadurch gekennzeichnet, dass** die Trägerführungen (10, 11) an der Plattform (2) befestigt sind.

2. Blattzugangsanordnung nach Anspruch 1, **dadurch gekennzeichnet, dass** die inneren Träger (8, 9) innerhalb und in einer Längsrichtung der äußeren Träger (6, 7) verschiebbar sind, und dass die Verlängerungsträger (12, 13) an einem Ende der inneren Träger (8, 9) bereitgestellt sind, das von der Turmführung (3) wegweist.

3. Blattzugangsanordnung nach einem der Ansprüche 1 oder 2, **dadurch gekennzeichnet, dass** der Verlängerungsträger (12, 13) über das Scharnier (14) mit den inneren Trägern (8, 9) verbunden ist und dass das Scharnier (14) in einem oberen Teil des Trägers (8, 9, 12, 13) angeordnet ist und eine wesentliche horizontale Achse aufweist.

4. Blattzugangsanordnung nach einem der Ansprüche 1 bis 3, **dadurch gekennzeichnet, dass** der Verlängerungsträger (12, 13) über das Scharnier (14) mit den inneren Trägern (8, 9) verbunden ist, **dadurch gekennzeichnet, dass** das Scharnier (14) in einem äußeren Teil oder einer Seite des Trägers (8, 9, 12, 13) angeordnet ist und eine wesentliche vertikale Achse aufweist.

5. Blattzugangsanordnung nach einem der Ansprüche 1 bis 4, **dadurch gekennzeichnet, dass** zwischen den inneren Trägern (8, 9, 12, 13) und den äußeren Trägern (6, 7) Räder, Rollen oder Buchsen (19, 20) bereitgestellt sind.

6. Blattzugangsanordnung nach einem der Ansprüche 1 bis 5, **dadurch gekennzeichnet, dass** die inneren Träger (8, 9) an einem Ende mit einem Anschlag (18) zur Anlage an den Trägerführungen (11) bereitgestellt sind.

7. Blattzugangsanordnung nach einem der Ansprüche 1 bis 6, **dadurch gekennzeichnet, dass** mindestens eine der Trägerführungen (10, 11) mit einem Motor oder einem Antrieb (16) zum Antreiben eines Drahtes (17) bereitgestellt ist, wobei der Draht (17) an einem Ende an der Trägerführung (11) an einem ersten Drahtverankerungspunkt (29a) befestigt ist, das andere Ende des Drahtes (17) an der Trägerführung (11) an einem zweiten Drahtverankerungspunkt (29b) auf der gegenüberliegenden Seite der Trägerführung (11) in Bezug auf den ersten Drahtverankerungspunkt (29a) befestigt ist, wobei der Draht (17) zwischen seinen Enden an den Verankerungspunkten (29a, 29b) befestigt und vom Motor oder dem Antrieb (16) zu den Verankerungspunkten (29a, 29b) über eine Anzahl von Rollen (23, 24, 25, 26, 27, 28) geführt wird, wobei der Draht (17) zwischen den Enden des Drahtes (17) mit einer Anzahl von Windungen um eine Rolle, ein Rad oder eine Winde des Motors 16 gewunden ist.

8. Blattzugangsanordnung nach Anspruch 7, **dadurch gekennzeichnet, dass** zwischen dem Draht (17) und mindestens einem der Verankerungspunkte (29a, 29b) ein Spannelement bereitgestellt ist.

9. Blattzugangsanordnung nach Anspruch 8, **dadurch gekennzeichnet, dass** das Spannelement ein elastisches Element, eine Feder oder eine Gasfeder ist.

## Revendications

1. Agencement d'accès pour pale (1) pour une pale de rotor d'une centrale éolienne ayant une tour, l'agencement (1) comprenant une plate-forme (2), des moyens guides de tour (3) pour guider la plate-forme (2) contre la tour, un agencement de barres (4, 5) capable d'être déplacé par rapport à la plate-forme (2) et reliant la plate-forme (2) aux moyens guides de tour (3), ledit agencement d'accès pour pale (1) comprenant un agencement de levage pour lever l'agencement d'accès pour pale (1) vers le haut et vers le bas, où l'agencement de barres (4, 5) comprend une poutre d'extension (12, 13) reliée à l'agencement de barres (4, 5) par l'intermédiaire d'une articulation (14), l'agencement de barres comprenant en outre une paire de poutres télescopiques comprenant des poutres extérieures (6, 7) et des poutres intérieures (8, 9), les poutres extérieures (6, 7) sont capables d'être déplacées dans des guides de poutre (10, 11) dans une direction longitudinale des poutres extérieures (6, 7) et par rapport à la plate-forme (2), **caractérisé en ce que** les guides de poutre (10, 11) sont fixés à la plate-forme (2).

2. Agencement d'accès pour pale selon la revendication 1, **caractérisé en ce que** les poutres intérieures (8, 9) sont capables d'être déplacées à l'intérieur et dans une direction longitudinale des poutres extérieures (6, 7), et que les poutres d'extension (12, 13) sont prévues à une extrémité des poutres intérieures (8, 9) qui est l'extrémité tournée à l'opposé de la tour guide (3).

3. Agencement d'accès pour pale selon l'une quelconque des revendications 1 ou 2, **caractérisé en ce que** la poutre d'extension (12, 13) est reliée, par l'intermédiaire de l'articulation (14), aux poutres intérieures (8, 9) et que l'articulation (14) est placée dans une partie supérieure de la poutre (8, 9, 12, 13) et a un axe sensiblement horizontal.

4. Agencement d'accès pour pale selon l'une quelconque des revendications 1 à 3, **caractérisé en ce que** la poutre d'extension (12, 13) est reliée, par l'intermédiaire de l'articulation (14), aux poutres intérieures (8, 9), **caractérisé en ce que** l'articulation (14) est placée dans une partie ou un côté extérieur de la poutre (8, 9, 12, 13) et a un axe sensiblement vertical.

5. Agencement d'accès pour pale selon l'une quelconque des revendications 1 à 4, **caractérisé en ce que** des roues, des galets ou des douilles (19, 20) sont prévus entre les poutres intérieures (8, 9, 12, 13) et poutres extérieures (6, 7).

6. Agencement d'accès pour pale selon l'une quelconque des revendications 1 à 5, **caractérisé en ce que** les poutres intérieures (8, 9), à une extrémité, sont pourvues d'un arrêt (18) pour venir en butée contre les guides de poutre (11).

7. Agencement d'accès pour pale selon l'une quelconque des revendications 1 à 6, **caractérisé en ce qu'**au moins un des guides de poutre (10, 11) est pourvu d'un moteur ou entraînement (16) pour entraîner un câble (17), lequel câble (17), dans une extrémité, est attaché au guide de poutre (11) au niveau d'un premier point d'ancrage de câble (29a), l'autre extrémité du câble (17) étant attachée au guide de poutre (11) au niveau d'un second point d'ancrage de câble (29b) sur le côté opposé du guidage de poutre (11) par rapport au premier point d'ancrage de câble (29a), ledit câble (17), entre ses extrémités, est attaché aux points d'ancrage (29a, 29b) et acheminé depuis le moteur ou l'entraînement (16) jusqu'aux points d'ancrage (29a, 29b) par l'intermédiaire d'un nombre de poulies (23, 24, 25, 26, 27, 28), ledit câble (17), entre les extrémités du câble (17), est enroulé, avec un nombre d'enroulements, autour d'une poulie, roue ou d'un cabestan du moteur (16).

8. Agencement d'accès pour pale selon la revendication 7, **caractérisé en ce qu'**un élément de mise en tension est prévu entre le câble (17) et au moins un des points d'ancrage (29a, 29b).

9. Agencement d'accès pour pale selon la revendication 8, **caractérisé en ce que** l'élément de mise en tension est un organe résilient, un ressort ou un ressort à gaz.
